# EUROPEAN PATENT APPLICATION

(11) **EP 1 257 072 A1**
(43) Date of publication of application: **13.11.2002**
(21) Application number: 01902802.6
(22) Date of filing: 07.02.2001
(51) Int. Cl.: H04B 7/26, G06T 13/00, G06F 13/00, G09G 5/36, G09G 5/00

(54) **SERVER DEVICE, COMMUNICATION TERMINAL, RELAY SERVER, CONVERSION RULE MANAGEMENT SERVER, AND RECORDING MEDIUM STORING PROGRAM**

(30) Priority: 10.02.2000 JP 2000034184
(71) Applicant: Sharp Kabushiki Kaisha, Osaka-shi, Osaka 545-8522 (JP)
(72) Inventor: YOSHIKAWA, Kohei, Nara-shi, Nara 630-8115 (JP); NISHIHATA, Minoru, Soraku-gun, Kyoto 619-0223 (JP)
(74) Representative: Müller, Frithjof E., Dipl.-Ing.
(86) International application number: JP0100868
(87) International publication number: WO01059957

(57) **Abstract**

An animated data converter (42) provided in a server (4) converts frame data managed by an animated data management section (41) into frame data adaptable in the terminal equipment (2), for example, by deleting graphic data which cannot be displayed in the terminal equipment (2). Furthermore, the animated data transmitting section (43) transmits animated data including the frame data to the terminal equipment (2). On the other hand, the terminal equipment (2) receives animated data composed of only self-adaptable graphic data and displays the animated data as received in an animated data display section (22). Therefore, as compared to the case of receiving animated data by the animated data management section (41), the burden of the terminal equipment (2) can be reduced, thereby displaying smoother animation. As a result, it is possible to provide an animation communications system which enables smooth animation to be displayed even in a terminal equipment of low processing speed.

## Description

### TECHNICAL FIELD

The present invention relates to an animation communications system for transmitting animation to a terminal equipment, more particularly relates to an animation communications system capable of displaying smoother animation display even with a portable telephone or other terminal equipments of poor function and performances.

### BACKGROUND OF THE INVENTION

In recent years, the use of portable terminal equipments such as portable telephones, portable information display terminal equipments, etc., has been widespread, and with improvements in functions of these terminal equipments, attempts have been made to enable the user to exchange information reactively and effectively by transmitting video or animation, etc., on the network.

For example, Japanese Laid-Open Patent Publication No. 10-275244/1998 (Tokukaihei 10-275244) discloses a system for displaying animated data by transmitting key frames and further interpolating these key frames. Another system is disclosed by Japanese Laid-Open Patent Publication No. 11-225168/1999 (Tokukaihei 11-225168) wherein when transmitting a bit stream indicative of animated picture, information regarding the transmission method and the transmission format is transmitted and received in addition to the transmission data, so as to dynamically alter the reproducing quality of video, voice, etc.

However, for portability, the terminal equipments generally do not have functions and performances which are as sophisticated as those of desk-top computers. Particularly, for the terminal equipments, which value the portability, it is very likely that sufficient functions and performances for reproducing animated data are not provided. As a result, with an increase in data to be processed in the terminal equipments, the frame rate, which is already low, becomes still lower, thereby presenting the problem that animation cannot be displayed.

As compared to the desk-top computers, the terminal equipments are generally more restricted in their functions, performances, sizes, weights, operating times, etc., and there exist terminal equipments of a variety of kinds according to intended use. Therefore, when the animated data is prepared and transmitted according to the terminal equipment of low function, the animated data becomes unexpressive. On the other hand, when the animated data is prepared and transmitted according to the terminal equipment of high function, depending on the function of the terminal equipment of the receiving end of the animated data, some of the animated data may not be displayed.

The present invention is achieved in finding a way to solve the above problem, and accordingly, it is an object of the present invention to provide an animation communications system which enables smooth animated data of even one kind which is reproduced by a sophisticated reproducing unit to be displayed even in a terminal equipment of low processing speed, without reducing the reproducing quality.

### DISCLOSURE OF THE INVENTION

In order to achieve the foregoing object, the server in accordance with the present invention for transmitting data indicative of animation to a terminal equipment is characterized by including:
a converter for converting first frame data wherein a frame of animation is expressed by at least one graphic data into second frame data to be adaptable in the terminal equipment based on a predetermined conversion rule.

According to the above structure, the server converts the first frame data into the second frame data. Therefore, it is possible for the terminal equipment to receive animated data, which is self-adapting, even when the first frame data is not self-adaptable, and the terminal equipment receives self-adapting animated data. In this way, as compared to the case of directly receiving the first frame data, the burden of the terminal equipment can be reduced, and an improved frame rate can be achieved when reproducing the animated data. Further, since the first frame data and the second frame data are the frame data, the server is capable of preparing the animated data for each terminal equipment in real time without the need of preparing the animated data for each terminal equipment beforehand or storage. As a result, it is possible to provide a system which permits animated data to be displayed smoothly by the terminal equipment without increasing the memory capacity required for the server.

The server of the foregoing structure may be arranged such that the converter converts first frame data into second frame data by converting graphic data inexpressible by the terminal equipment to be expressible by the terminal equipment or deleting the graphic data inexpressible by the terminal equipment.

According to the foregoing structure, the server converts or eliminates the inexpressible graphic data into the second frame data, the terminal equipment receives only the animated data indicative of expressible graphic data. As a result, the terminal equipment eliminates the process of deleting/converting the graphic data which is not expressed by own apparatus. Therefore, even in the case where the first frame data is not prepared for the terminal equipment, the burden of the terminal equipment can be reduced, thereby permitting a smooth animation display.

The server of the above arrangement having the foregoing structure may also be arranged such that the converter converts the first frame data into the second frame data by interpolating the key frames as input as the first frame data at a frame rate according to the terminal equipment.

According to the foregoing structure, the server performs the interpolation of the frames according to the performance of the terminal equipment, etc., and it is therefore possible to eliminate the interpolation of the frames by the terminal equipment. As a result, the burden bored by the terminal equipment can be reduced, and a smooth animation display can be realized. Therefore, even when the first frame data is not prepared for the specific terminal equipment, it is possible to reduce the burden of the terminal equipment and realize a smooth animation display.

The server having the foregoing structure may be arranged so as to further include a format converter for converting the second frame data into bit mapped animated data.

According to the foregoing structure, the format converter of the server converts the second frame data into bit mapped animated data. Therefore, even the terminal equipment, which cannot produce the frame data, can reproduce animation according to the first frame data without problems as long as being provided with the function of reproducing the bit mapped animation. Therefore, even when the first frame data is not prepared for the specific terminal equipment, the burden of the terminal equipment can be reduced, and a smooth animation can be displayed.

It is further preferable that each of the servers of the foregoing structures be provided with a terminal information receiving section for receiving information regarding the terminal equipment connected to the server, wherein the converter converts the first frame data into the second frame data referring to the information regarding the terminal equipment.

According to the foregoing structure, the converter converts the first frame data into the second frame data according to the terminal information. Therefore, even in the case of connecting the plural types of terminal equipments, it becomes possible for the server to output the animated data according to each terminal equipment, thereby displaying a smooth animation display in each terminal equipment.

It is further preferable that each of the servers having the foregoing structures be arranged so as to include a situation detecting section for detecting a situation at a time of transmitting the animated data, wherein the converter converts the first frame data into the second frame data referring to the situation as detected.

According to the foregoing structure, the situation detecting section, for example, detects circumambient brightness, how busy is the line (rate of congestion), etc., changes the conversion method according to the situation as detected. With this structure, for example, the second frame data of high contrast is prepared in the circumambient brightness is dark, or the second frame data of small data amount is produced when a line is busy. As described, the server of the foregoing structure is capable of adjusting the second frame data according to the situation to be adaptable in the terminal equipment, the terminal equipment produces an effective animation which is easy to see for the user.

Each of the servers having the described structure may be further arranged such that the situation detecting section predicts circumambient brightness of the terminal equipment, and the converter adjusts a contrast according to the circumambient brightness in such a manner that a higher contrast is set for darker circumference than brighter circumference when converting the first frame data into the second frame data.

According to the foregoing structure, when the circumambient brightness of the terminal equipment is estimated to be dart based on time, season, or weather, the second frame data is adjusted to be of still higher contrast. As a result, it becomes possible for the terminal equipment to reproduce an effective animation which is easy-visible for the user.

On the other hand, in order to achieve the above object, the terminal equipment in accordance with the present invention, provided with a display section for displaying animation, characterized by including:
an animated data receiving section for receiving data indicative of animation by communicating with a server provided with a converter for converting first frame data wherein a frame of animation is expressed by at least one graphic data into second frame data adaptable in the terminal equipment based on a conversion rule determined referring to terminal information indicative of the terminal equipment; and
a terminal data transmitting section for transmitting terminal information indicative of own terminal equipment to the server.

According to the foregoing structure, it is possible for the terminal equipment to transmit information on own apparatuses, to each of the servers having the foregoing structures, and thus even when the server transmits animated data to the terminal equipments of a plurality of kinds, each terminal equipment can receive self-adapting animated data. As a result, a still smoother animation display can be realized.

In order to achieve the foregoing object, a terminal equipment provided with a display section for displaying animation, is characterized by including:
an animated data receiving section for receiving data indicative of animation by communicating with one of a plurality of servers provided with a converter for converting first frame data wherein a frame of animation is expressed by at least one graphic data into second frame data adaptable in the terminal equipment based on a predetermined conversion rule; and
a display control section which controls to determine animated data sent from which of the plurality of servers is to be displayed in the display section.

With this structure, the display control section controls to determine the server as the transmitting end among a plurality of servers based on, for example, quality, isochronal feature, or an amount of data already transmitted. In this way, the terminal equipment can select a better animated data and offers a smoother animation display as compared to case of adopting one server.

In order to achieve the above object, a relay server in accordance with the present invention is characterized by being provided between a terminal equipment having a display section for displaying animation, and a plurality of servers for outputting data indicative of animation, wherein:
when receiving a request from the terminal equipment, said relay server i) selects one of said plurality of servers, each being provided with a converter for converting first frame data in which a frame of animation is expressed by at least one graphic data into second frame data to be adaptable in the terminal equipment based on a predetermined conversion rule, and ii) relays communications between a server as selected and the terminal equipment.

According to the foregoing structure, the relay server selects one of a plurality of servers, and relays communications with the terminal equipment. Therefore, the relay server can select better animated data, and the terminal equipment can therefore offers a still smoother animation.

In order to achieve the above object, a conversion rule management server in accordance with the present invention is characterized by including:
a conversion rule transmitting section for transmitting a converter for converting a conversion rule for converting the first frame data into the second frame data to a server provided with a converter which converts first frame data wherein a frame of animation is expressed by at least one graphic data into second frame data, according to the terminal equipment, based on a predetermined conversion rule.

With this structure, the conversion rule management server transmits the conversion rule into the server having each structure. Therefore, irrespectively of the number of servers, the installation place, etc., the conversion rule can be specified with ease, and it is possible to perform a plurality of servers in parallel.

The server, the terminal equipment, the relay server, and the conversion rule management server may be realized by hardware, or it may be arranged so as to execute the program recorded on the recording medium.

When executing these programs, the computer operates as the server, the terminal equipment, the relay server or the conversion rule management server. As a result, a system which permits a terminal equipment to offer a still smoother animation display can be realized as in the respective structures of the foregoing devices.

Additional objects, features, and strengths of the present invention will be made clear by the description below. Further, the advantages of the present invention will be evident from the following explanation in reference to the drawings.

### BRIEF EXPLANATIONS OF THE DRAWINGS

Figure 1 is a block diagram indicative of essential parts of an animation communications system in accordance with one embodiment of the present invention;
Figure 2 is an explanatory drawing showing one example of the frame data before conversion, which is to be reproduced by the animation communications system.
Figure 3 is an explanatory drawing showing one example of the frame data after conversion, which is to be reproduced by the animation communications system.
Figure 4 is a block diagram showing a modified example of the animation communications system.
Figure 5 is a block diagram illustrating essential parts of a server in accordance with another embodiment of the present invention.
Figure 6 is an explanatory drawing indicative of a conversion rule of the server.
Figure 7 is a block diagram showing essential parts of the server in accordance with still another embodiment of the present invention.
Figure 8 is a block diagram showing essential parts of the server in accordance with still another embodiment of the present invention.
Figure 9 is an explanatory drawing showing a conversion rule of the server.
Figure 10 is an explanatory drawing indicative of selection standard of the conversion rule.
Figure 11 is a block diagram showing essential parts of the server in accordance with another embodiment of the present invention.
Figure 12 is a block diagram illustrating essential parts of the animation communications system in accordance with still another embodiment of the present invention.
Figure 13 is an explanatory drawing, which shows a conversion rule of the server.
Figure 14 is an explanatory drawing showing a selection standard of the conversion rule.
Figure 15 is a block diagram showing essential parts of the animation communications system in accordance with still another embodiment of the present invention.
Figure 16 is a block diagram showing essential parts of the animation communications system in accordance with another embodiment of the present invention.
Figure 17 is a block diagram showing essential parts of the animation communications system in accordance with still another embodiment of the present invention.
Figure 18 is a block diagram showing essential parts of the animation communications system in accordance with still another embodiment of the present invention.
Figure 19 is a block diagram showing essential parts of the animation communications system in accordance with still another embodiment of the present invention.
Figure 20 is a block diagram illustrating essential parts of the animation communications system in accordance with still another embodiment of the present invention.

### MOST PREFERRED EMBODIMENT OF THE PRESENT INVENTION

In the following, the present invention will be explained in more details through embodiments and comparative examples; however, the present invention is not intended to be limited to these embodiments.

### [FIRST EMBODIMENT]

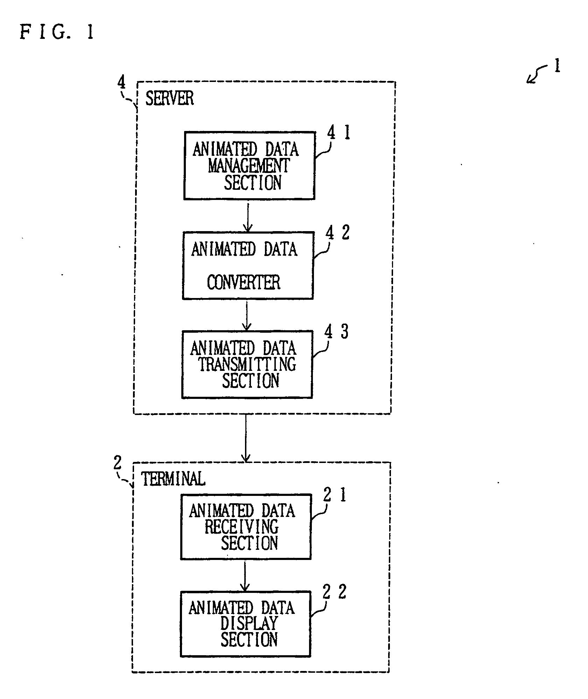

The following descriptions will explain one embodiment of the present invention in reference to Figure 1 through Figure 4. An animation communications system in accordance with the present embodiment is capable of displaying animation expressed by key frame data even in portable telephones or other terminal equipments of low processing speed, or terminal equipments of poor image processing functions, without significantly lowering the frame rate. The animation communications system includes, for example, a carry-in terminal equipment 2, and a server 4 which enables animated data to be transmitted to the terminal equipment 2 via a base station (not shown).

The server 4 includes an animated data management section 41 for managing the key frame data KF, an animated data converter 42 (converter) for converting in real time the key frame data KF based on a predetermined rule according to the terminal equipment 2, and an animated data transmitting section (transmitting section) 43 for transmitting converted data. The server 4, for example, transmits data to the specific terminal equipment 2 such as a compact portable information terminal equipment, a portable telephone or the like.

It is therefore possible for the terminal equipment 2, which serves as a specific display apparatus, to receive data according to its display device function or other functions, or its processing power. In this way, for example, as compared to the case of receiving data adaptable for multi-function and high-processing speed apparatus such as desk-top computers, and displaying the data as received only in a range adaptable in the desk-top computers, etc., the burden of the terminal equipment 2 can be significantly reduced, thereby providing a relatively smooth animation display even for the terminal equipment 2 of very low processing power.

Specifically, the animated data management section 41 in accordance with the present embodiment stores the animated data A in the same format as the desk-top computers. This animated data A includes ordered key frame data KF, and each key frame data KF includes at least one graphic data E indicative of figure, such as line data or color data. Additionally, the animated data A may include as an interpolation rule for interpolating between key frames such subsidiary data as picture change time, correspondence between graphic data E in respective key frame data KF.

When reproducing the animated data A, the key frame data KF is extracted in order, and the interpolation of the key frame data KF is interpolated as necessary. Further, after the graphic data C in the frame is extracted from each frame data F as interpolated or extracted, one frame is formed in accordance with the figure I indicative of graphic data E and is displayed on a screen. The foregoing process of displaying each frame is repeated, thereby displaying a moving animation picture.

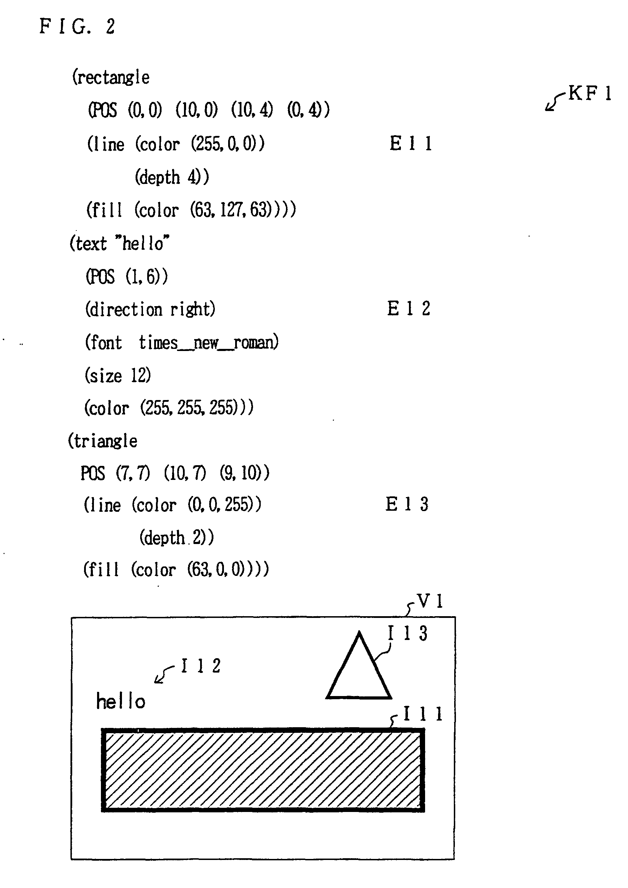

For example, the screen V1 shown in Figure 2 is constituted by I11 indicative of square figure, I12 indicative of character string, and I13 indicative of triangle figure, and the key frame data KF1 includes the frame includes graphic data E11 to E13 indicative of figures I11 to I13 respectively. As compared to the terminal equipment 2, such as desk-top computers, etc., the key frame data KF is intended to be reproduced by an apparatus of more sophisticated function in view of processing ability, size of display screen, gradation levels, etc., and each graphic data E includes data specifying color from a variety of colors, a line thickness from a variety of line thicknesses, or a spline instruction.

For example, in an example shown in Figure 2, the graphic data E11 indicative of squire shape includes an element ( " (POS ...) " ) indicative of display position, an element ( " (line ...) " ) indicative of a side, and an element (" (fill ...)" ) indicative of inside. The display position is defined by a coordinate at each peak, and the side is defined by color (" (color ...) " ) and thickness (" (depth ...) " ), and the inside is specified by color (" (color ...) " ).

Similarly, the graphic data E12 indicative of character string includes an element indicative of display position, an element (" (direction ...) ") indicative of direction, an element (" (font ...)" ) indicative of font, an element (" (size ...)" ) indicative of size, an element indicative of color. The graphic data E13 is expressed by display elements indicative of display position, sides and the inside of the triangle figure. In Figure 2, each display element is expressed by a character string including a command such as "POS", etc. However, it is needless to mention that the binary data may be adopted as long as each display element is specified.

As a result, the apparatus on the reproducing side reproduces the key frame data KF faithfully, for example, like the screen V1, and the graphic data E11 is displayed as a square I11 with the specific line thickness (four dots, for example). Similarly, the character string I12 is displayed in a specific fond and size.

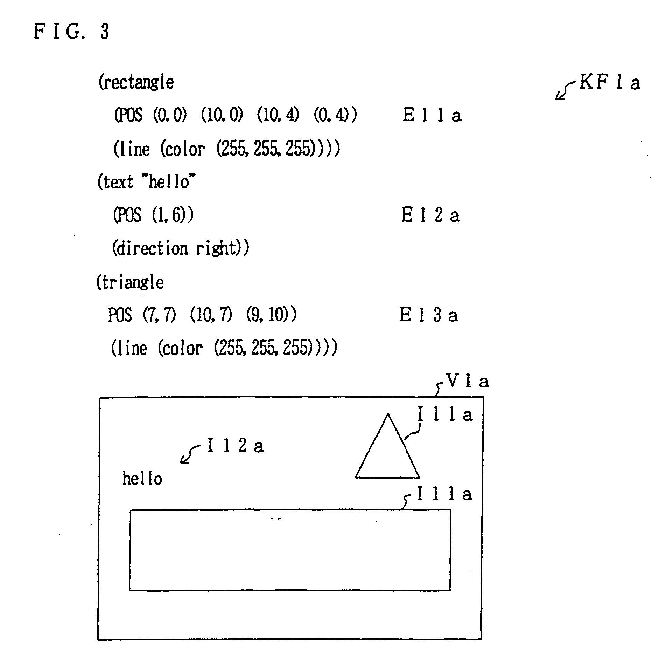

On the other hand, the animated data converter 42 shown in Figure 1 converts the animated data A to be adaptable in a specific terminal equipment 2 according to the predetermined rule. The animated data converter 42 in accordance with the present embodiment converts the data into the data including only elements displayable by the terminal equipment 2. Then, the key frame data KF1 shown in Figure 2 is converted into the key frame data KF1a shown in Figure 3.

In the key frame data KF1a, to be adaptable in the terminal equipment 2 which can display only the monaural binary data, a color of each display element is digitalized (black/white data) and is converted into "(255, 255, 255)" irrespectively of original color except for black. Additionally, the animated data converter 42 is intended to be applied to the terminal equipment 2 which is not capable of expressing the line thickness, color of the inside, and therefore, from the display element of each graphic data E, the information (attribution) indicative of line thickness, and the color of the inside are omitted. Similarly, to be applicable to the terminal equipment 2 which is not capable of changing the font and size of the characters, in the graphic data E12a of the key frame data KF1a, the data indicative of font and size of characters such as " (size ...)" , " (font ...) " , etc., are omitted from the graphic data E12

The animated data Aa as converted by the animated data converter 42 is transmitted to the terminal equipment 2 by the animated data transmitting section 43. As to the order of transmission, for example, a generally adopted transmission order capable of transmitting data to the terminal equipment 2 may be adopted, according to the protocol HTTP (Hyper Text Transfer Protocol) defined in the Internet.

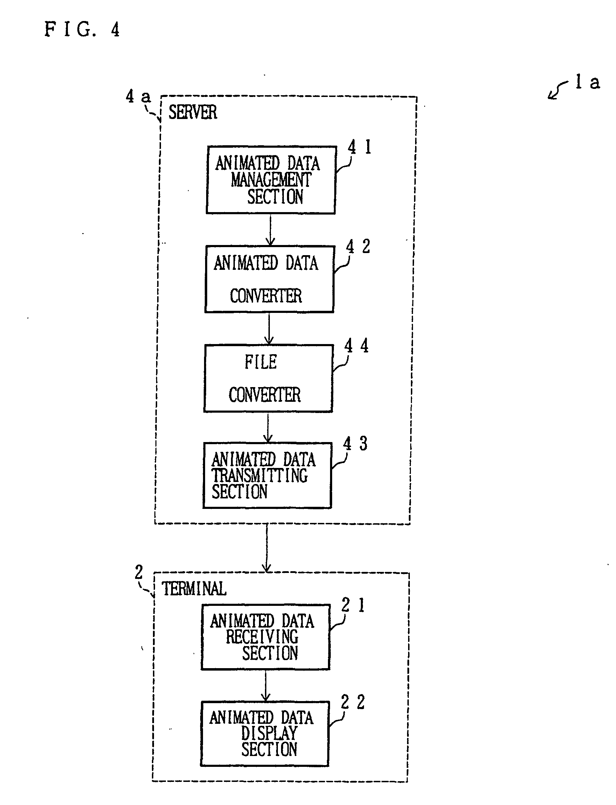

On the other hand, in the terminal equipment 2, the animation receiving section 21 receives animated data Aa, and an animated data display section (display section) 22 reproduces the animated data Aa as received while interpolating the key frame KF of the animated data Aa. As a result, as shown in Figure 3, the frame shown in Figure 4 displays specific graphic data I11a to I13a by only the display elements which the terminal equipment 2 can display as shown in the screen V1a. In Figure 2 and Figure 3, the digitalization of the color of display element, the omission of data on the font and size of the character, the thickness of the side, and the color in the inside are shown as examples of the conversion process by the animated data converter 42. However, it may be arranged so as to reduce color, alter the line thickness and invalidation of spline instruction.

Here, the design of terminal equipment 2 is restricted in size, weight, etc., and it is necessary to ensure the operating time according to the use. Therefore, as compared to the server 4 which does not have such restriction, the communication speed, the processing speed or function can be set significantly low.

In the case of the portable telephones, for example, the resolution of the display screen is 96 × 92 pixels which is significantly lower than the resolution of the desk-top computer, i.e., 1028 ×768 pixels in the case of the XGA (Extended Graphics Array). For the desk-top computer, the number of gray levels is around 16,000,000 colors for 24 bit color, and for the terminal equipment 2, the number of gray levels is monaural 2-levels. For computers, those provided with RAM with memory capacity exceeding 100M byte, and the memory capacity of the hard disk of not less than 10G byte may be generally used. However, for the terminal equipment 2, the capacity of data which can be stored in one time is set in a range of from 2 k bytes to 6 k bytes. Further, the processing speed is set more than 1/100 to 1/1000 times lower than the processing speed of desk-top computers. In consideration of consumption power, the communication speed between the terminal equipment 2 and the base station (not shown) is set to, for example, 9600 bps, 32 kbps, or 64kbps, etc., which is significantly lower than the communication speed between the desk-top computers as compared to 10Mbps, or 100 Mbps, etc.

Therefore, if the terminal equipment 2 which receives animated data A composed of key frame data KF shown in Figure 2, and determines if the animated data A as received can be displayed in the own device, and in the case of displaying only the figure I which can be displayed in its display device, the burden of the terminal equipment 2 increases, and it is difficult to increase the number of frames.

However, according to the animation communications system 1 in accordance with the present embodiment, the quality of the key frame data KF itself is changed dynamically by the server 4 according to the attribution of the final display terminal equipment, the screen size, the display dot number, color reproduction function. Therefore, the terminal equipment 2 is capable of receiving the key frame data KF composed of only the displayable graphics I. As a result, the terminal equipment 2 is capable of displaying the key frame data KF with a small amount of computation. Additionally, the display element which cannot be displayed by the terminal equipment 2 is eliminated on the side of the server 4 and thus the display element is not transmitted. As a result, the amount of data to be transmitted in the communications path can be reduced as well as the amount of required computation for the terminal 2 to receive the data and required memory capacity for storing the received data.

As described, as it is possible to reduce the burden of the terminal equipment 2, even for the terminal equipment 2 of low processing speed, a smoother animation display with greater number of frames can be realized. Particularly, the terminal equipments which value the portable telephones, etc., has surplus processing ability, and as compared to the desk-top computer, the number of reproduciable frames can be reduced. Therefore, a more outstanding improvement in increasing the number of the frames can be obtained.

Additionally, due to the described restrictions, it is difficult for the terminal equipment 2 to satisfy the size, weight, operating time, function and processing speed at one time, and the terminal equipments of variable functions and processing speed are used according to the purpose. Therefore, it takes time for the creator of the animated data A to prepare the animated data A to be adaptable in each of the terminal equipments 2.

By the way, according to the animation communications system 1 of the present embodiment, the animated data converter 42 of the server 4 produces the animated data A for the specific terminal equipment 2 from the animated data stored in the animated data management section 41. Therefore, the animated data A can be used in common among the terminal equipments 2 and the desk-top computers.

Furthermore, according to the animation communications system 1 of the present embodiment, in expressing the animated data A, adopted are display elements of higher functions than the functions of the terminal equipment 2 currently in use which cannot be displayed completely in the terminal equipment 2 currently in use is displayed, and animated data converter 42 converts the animated data A according to each terminal equipment 2. In this way, even for the expected future improvements in functions of the terminal equipment 2, the system of the present embodiment will be applicable only by modifying the the animated data converter 42 according to the new terminal equipment 2. Specifically, the functions of the terminal equipment 2 are lower than those of desk-top computers, and generally, a part of the functions of the terminal equipments 2 is improved following the functions of the desk-top computers. Therefore, it is relatively easy to predict the function which can be installed in the terminal equipment 2 in near future. As a result, the animated data A can be used in common with future terminal equipments 2.

The animated data A is the data in the key frame format wherein the frame is described in figure unit. Therefore, the animated data A for the specific terminal equipment 2 can be produced in real time. Therefore, it is possible to reduce the required memory capacity on the side of the server 4, unlike the case of, for example, MPEG (Moving Picture Expert Group)-1, -2 or -4 format, etc., wherein the frame is described in pixel unit, which takes time in encoding, and thus, for example, it is required to prepare data adaptable in a specific terminal equipment 2 beforehand in order to output the data for the specific terminal equipment 2 in real time without using a dedicated hardware.

Here, in the case where the terminal equipment such as a compact-size terminal equipment, a portable telephone, etc., does not store the program for displaying animation in the key frame interpolation system, and has only the function of displaying the animation GIF (Graphics Interchange Format), etc., as shown in the server 4a in the modified embodiment shown in Figure 4, a file converter (format converter) 44 is provided between the animated data converter 42 and the animated data transmitting section 43, and it may be arranged so as to transmit the animated data A after converting the animated data A in the bit mapped format for the specific terminal equipment 2, to be adaptable in the terminal equipment 2. In this case, the animated data display section 22 of the terminal equipment 2 displays the bit mapped animated data A.

In the case where the terminal equipment 2 such as a still more compact terminal equipment 2, etc., stores only the display program of a static screen and the program for switch control, etc. The file converter 44 converts the animated data A for a specific terminal equipment 2 into a plurality of static image files and a document format composed of the switch instruction, and the animated data display section 22 of the terminal equipment 2 is switched according to a switch instruction, thereby displaying animation.

According to the foregoing structure, even when the animation in the key frame interpolation system cannot be displayed, the animated data A can be displayed by the terminal equipment 2 without problems. Additionally, the server 4a in the modified example is also arranged such that after converting the animated data A to be adaptable data for the terminal equipment 2, the data is further converted into the bit map format. With this arrangement, such problem that the terminal equipment 2 does not receive inadaptable data. Therefore, the burden of the terminal equipment 2 can be reduced, thereby realizing a smoother animation display.

By the way, according to the above explanations, as the conversion method of the animated data converter 42, for example, explanations have been given through the case where the graphic data C which cannot be processed by the terminal equipment 2 is taken out from the key frame data KF by converting or deleting the graphic data C; however, the present invention is not intended to be limited to the foregoing example. For example, it may be arranged such that the animated data converter 42 outputs the frame data according to the terminal equipment 2, i.e., for example, he frame data obtained by interpolating the key frame data KF as long as data wherein the frame of animation is expressed by at least one piece of graphic data can be output.

In this case, in addition to the data shown in Figure 2, additionally, the animated data management section 41 stores the relationship between the graphic data in each frame data KF in addition to the data shown in Figure 2. Further, it may be arranged so as to store video change time.

On the other hand, the animated data converter 42 determines the number of interpolation frame data IFs so that the sum of the key frame data KF and the frame data IF prepared by interpolating the key frame data KF within the number of frames displayable by the terminal equipment 2. The sum of the key frame data KF and the frame data IF prepared by interpolating the key frame data KF is set within the number of frames which can be displayed in the terminal equipment 2, and interpolates mutually different display elements between key frame data KF, such as position, color of the graphic data E, so as to realize smooth change of the corresponding graphic data E from the key frame data KF to the next key frame data KF.

For example, in the case where the respective coordinates of the adjacent two key frame data KF in the graphic data E are (0,0) and (10,10), and a linear interpolation is applied to one frame data IF, the coordinate of the graphic data E in the frame data IF will be (5,5). In this example, explanations have been given through the case where the linear interpolation is performed, i.e., equally divided. However, as long as a certain number of frame data IF can be prepared from the key frame data KF, other interpolation method such as non-linear interpolation based on a predetermined function may be adopted.

In any case, the animated data conversion section 42 interpolates the key frame data KF with the number of frames according to the terminal equipment 2, and outputs the frame data F composed of the key frame data KF and the interpolated frame data IF, and the animated data transmitting section 43 transmits the animated data A indicative of frame data F to the terminal equipment 2, and thus the interpolation process to be performed by the terminal equipment 2 can be omitted. With this structure, even the terminal equipment 2 of very low processing speed, which is not capable of interpolating the key frame data KF, the animated data A can be reproduced. Additionally, by performing the frame interpolation and conversion/deletion of the graphic data E, which cannot be expressed by the terminal equipment 2, the burden of the terminal equipment 2 can be reduced. For this beneficial feature, the animation communications system of the present invention is suited especially for the terminal equipment 2 of low speed.

### [SECOND EMBODIMENT]

By the way, it may be arranged such that the animated data converter 42 sets a conversion logic to a specific terminal equipment at every display element. However, as above-explained, there exist terminal equipments 2 of variable functions and performances, and the performances and the functions thereof are improved year by year, it is desirable that animated data converter 42 has easy adjustable structure.

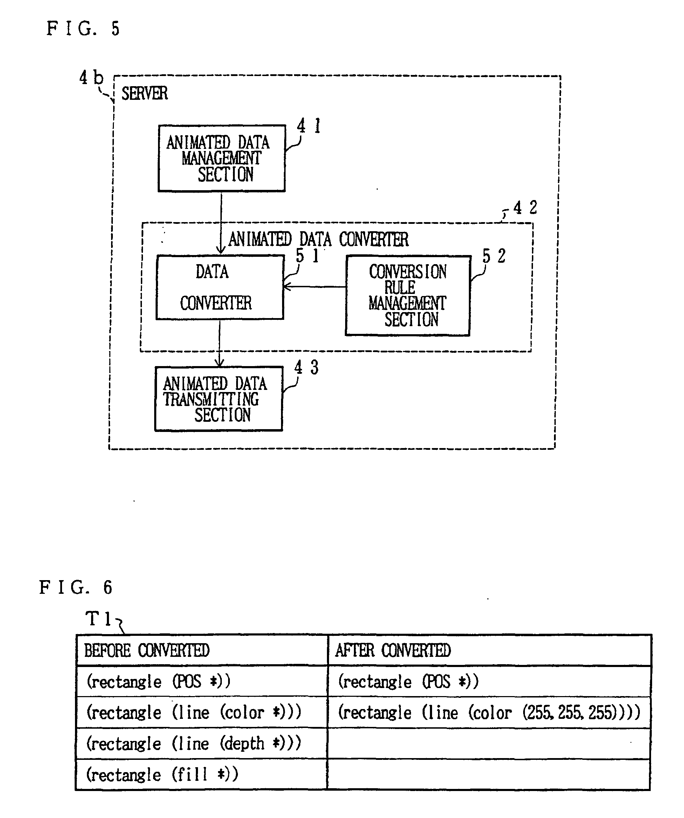

As illustrated in Figure 5, according to the server 4b of the present embodiment, as illustrated in Figure 1, the animated data converter 42 is divided into the data converter 51 and the conversion rule management section 52, and referring to the conversion rule stored in the conversion rule management section 52, the data converter 51 converts the animated data A according to the specific terminal equipment 2 using a conversion logic in common among respective terminal equipments 2.

Specifically, as illustrated in Figure 6, the conversion rule management section 52 in accordance with the present embodiment stores as conversion rules, the list of combinations of the patterns before conversion and the patterns after conversion, and the data converter 51 finds out the portions to be fit (matched) in the pattern before conversion from the key frame data KF shown in Figure 2, and further by replacing the portion with the pattern after conversion, as illustrated in Figure 3, the key frame data KF1a for the specific terminal equipment 2 can be prepared. Additionally, " ∗ " marked in the pattern before conversion indicates the matching with an arbitrary character string, and " ∗ " marked in the pattern after conversion indicates that no conversion is to be applied (before conversion).

Specifically, for example, in the conversion table shown in Figure 6, the data in the first line indicates that no conversion is to be applied with respect to the positional data of the squire figure, and the data in the second line indicates that the color of the lines is automatically changed to the specific color (while color indicated by "255,25,255" in this example). Further, in this conversion table, the columns for the pattern after conversion in the third and fourth lines remain blank, which means that the line thickness and the color of the inside of the squire figure are to be deleted irrespectively of the contents of the data before conversion.

With this structure, the conversion rule management section 52 which stores therein the conversion rule for the terminal equipment 2 is separately provided from the data converter 51. In this way, even when the performances and the functions of the terminal equipment 2 are improved, it is not necessary to change the conversion logic of the data converter 51 only by changing the contents of the conversion rule management section 52. As a result, an overall expandability of the animation communications system 1 can be maintained.

Further, it is possible to operate operating servers 4b in accordance with the present embodiment simultaneously in parallel for the number of kinds of the terminal equipment 2 by means of the same data converter 51 merely by replacing the conversion rule management section 52 for the kind.

Therefore, for example, as compared to the case of setting a conversion logic for the specific terminal equipment 2 for each display element, the required process for operating the animation communications system 1 can be simplified.

### [THIRD EMBODIMENT]

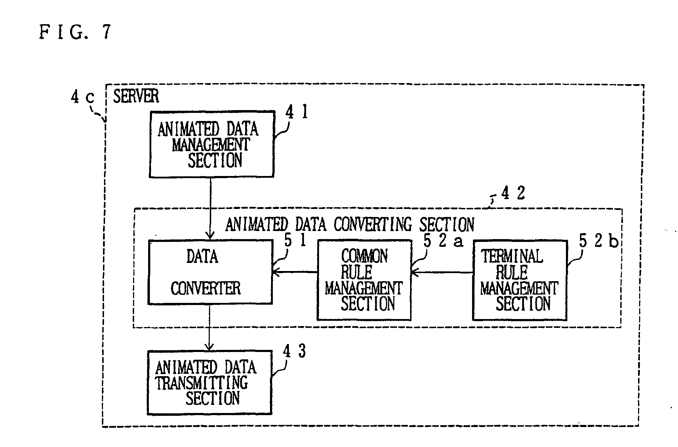

As illustrated in Figure 7, a server 4c in accordance with the present invention is arranged such that the conversion rule management section 52 shown in Figure 5 is divided into a common rule management section 52a and a terminal rule management section 52 b .

The common rule management section 52a is arranged so as to control the rules in common among all the terminal equipments 2, examples of which include the rules for deleting/converting the preserved display elements in view of future improvements in the functions and the performances of terminal equipments 2. On the other hand, the terminal rule management section 52 b controls the rules particular to the specific terminal equipment 2 which cannot be converted by the common rule. Further, the data converter 51 converts the animated data A based on the conversion rules of the rule management sections 52a and 52 b. Here, in the case where the conversion rules differ between the rule management sections 52a and 52b, the conversion rule of the terminal rule management section 52 b has priority.

As described, according to the described server 4c in accordance with the present embodiment, the common rules for all the terminal equipments 2 and the rules particular to the specific terminal equipment 2 can be controlled separately by the rule management sections 52a and 52b respectively. With this structure, when setting the server 4c for the terminal equipment 2, it is only required to alter the conversion rule of the terminal rule management section 52b, and it is therefore possible to save labor in operating the animation communications system 1.

### [FOURTH EMBODIMENT]

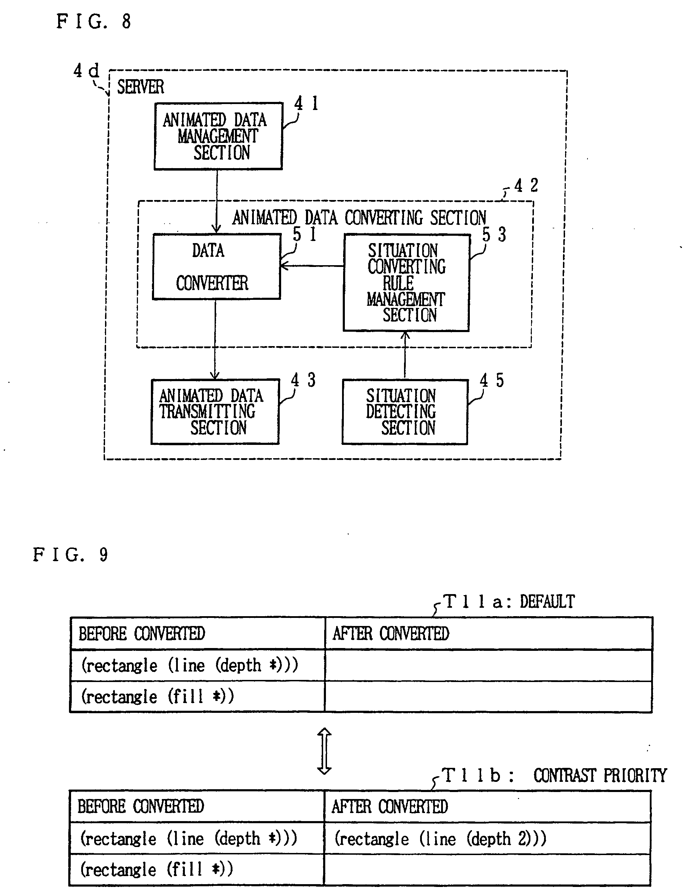

In the described first through third embodiments, explanations will be given through the case where the server 4 (4a to 4c) converts the animated data A always by the same conversion rule. In contrast, in the present embodiment, the explanations will be given through the case of altering the conversion rule according to the situation in reference to Figure 8 through Figure 11. In the following, an application to the structure of the second embodiment will be explained as one example.

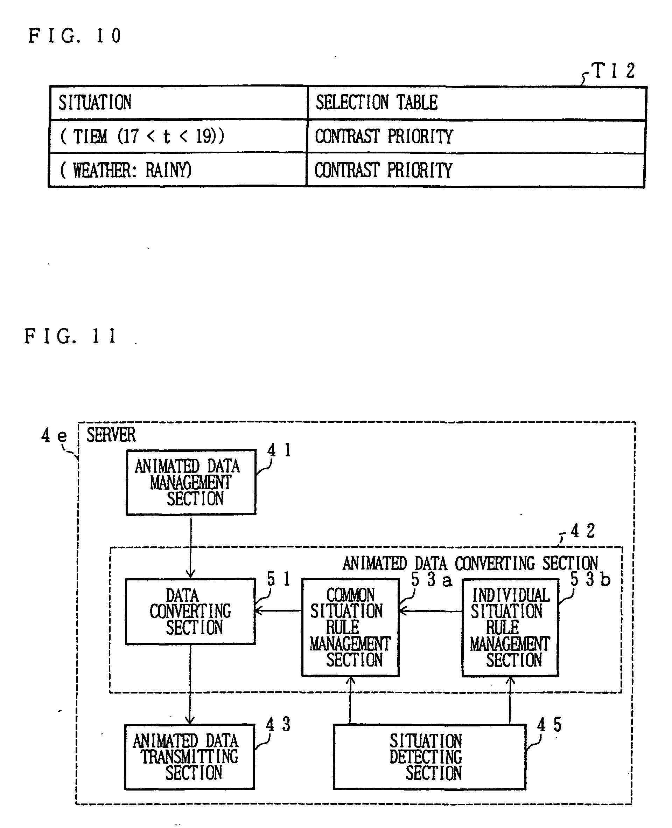

Namely, as illustrated in Figure 8, a server 4d in accordance with the present embodiment is provided with a situation detecting section in addition to the structure of the server 4b shown in Figure 45, and a situation converting rule management section 53 as the conversion rule management section 52. As illustrated in Figure 9, this situation converting rule management section 53 provided as the conversion rule management section 52 stores for each situation the same conversion tables T11a and T11b as those stored in the conversion rule management section 52, and further stores therein a Table T12 shown in Figure 10 indicative of the determination standard for the selection among the conversion tables T11a ...

In the present embodiment, based on time and weather, a situation detecting section 45 estimates the circumambient brightness of the terminal equipment 2, and the situation converting rule management section 53 switches between the conversion tables T11a ... for general (default) use and a conversion table T11b for use in emphasizing contrast.

Specifically, in the general-use conversion table T11a, stored is the rule for deleting data on the line thickness for the square figure and the color of the inside of the square; while, in the contrast emphasize use conversion Table 11b, stores is the rule for converting the line thickness for the squire into "2" irrespectively of the line thickness as specified before conversion. As a result, the animated data converter 42 outputs the animated data A in which the contrast is more emphasized by adopting the conversion table T11b as compared to the case of adopting the conversion table T11a.

The situation detecting section 45 in accordance with the present embodiment is arranged so as to detect the instant situation of the data conversion, specifically, the data with regard to time, season, weather, etc., and determines which conversion table T11a is to be selected among the conversion tables T11a. For example, according to the Table T12 shown in Figure 10, the conversion is to be performed at time between 17:00 to 19:00, the time of conversion is determined to be "in the evening", and the contrast priority Table T11b is adopted. Also, when the weather is determined to be "rainy" , the contrast priority table T11b is adopted.

Incidentally, the information on time and seasons can be obtained, for example, by adopting a software module provided with a clock function and a calendar function. The information on weather can be obtained, for example, by connecting a weather information site in the internet, etc., to a responsible service station. Here, in the case where the service station requires inputs of the positional information subjected to the weather forecast, the terminal equipment 2 obtains the positional place, for example, by satellite communication, or based on the wireless base station with which the terminal equipment 2 can communicate, and the situation detecting section 45 contacts the service station for the positional information of the terminal equipment 2. Alternatively, it may be arranged such that the situation detecting section 45 receives the weather information which the terminal equipment 2 obtained by contacting the service station. Incidentally, the movable range of the terminal equipment 2 is limited, and in this limited range, the user can contact only within the range of the same place of informing the user if the informing place to the service station remains unchanged. It may be also arranged such that the terminal equipment 2 detects the pressure, and based on the results of detection of the weather, the terminal equipment 2 or the situation detecting section 45 estimates the weather. For example, in the case of the terminal equipment provided with a camera, it may be arranged such that the situation detecting section 45 obtains the circumambient brightness of the terminal equipment 2 based on the resulting camera shooting.

In the above example, the circumambient brightness of the terminal equipment 2 is estimated, and the contrast of the animated data A is adjusted. For example, according to the degree of congestion between the terminal equipment 2 and the server station 4d, the conversion rule may be adjusted so as to reduce the amount of data of the animated data A.

In any case, the situation detecting section 45 detects the situation, and the situation converting rule management section 53 selects the conversion rule according to the situation. It is therefore possible for the server 4d to generate the animated data A according to the situation of reproducing the animation, and the terminal equipment 2 can therefore reproduce effective animation which the user can see it with ease.

### [FIFTH EMBODIMENT]

As illustrated in Figure 11, a server 4e in accordance with the present embodiment is arranged such that the situation converting rule management section 53 shown in Figure 8 is divided into a common situation rule management section 53a which controls the common rule for all the situation and an individual situation rule management section 53b which controls an individual conversion rule according to each situation as in the conversion rule management section 52 in accordance with the third embodiment. In the case where the conversion rule of the rule management sections 53a and 53b differs, the conversion rule of the rule management section 53b has priority.

As described, according to the described server 4e in accordance with the present embodiment, the common rules for all the situations and the rules particular to the specific situation can be controlled separately by the rule management sections 53a and 53b respectively. With this structure, it is therefore possible to save labor in operating the animation communications system 1.

### [SIXTH EMBODIMENT]

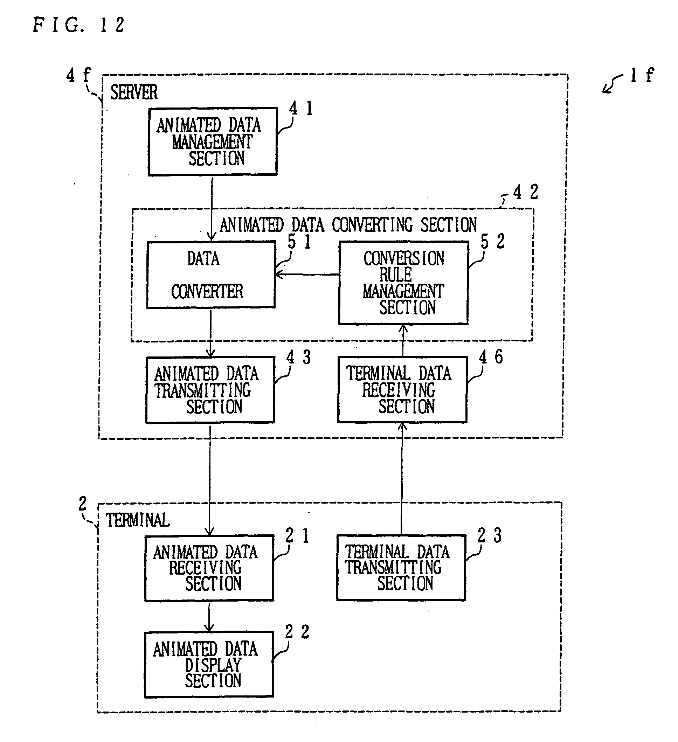

In the first through fifth embodiments, explanations will be given through the case where the terminal equipment 2 is specified beforehand. In contrast, the present embodiment will be explained referring to Figures 12 through 14, with regard to a server 4f capable of transmitting the animated data A according to the respective terminal equipments of a plurality of kinds by identifying each terminal equipment 2. Incidentally, the structure of the present embodiment is applicable to any of the structures in accordance with the first through fifth embodiments. In the following, an application to the structure of the second embodiment will be explained as one example.

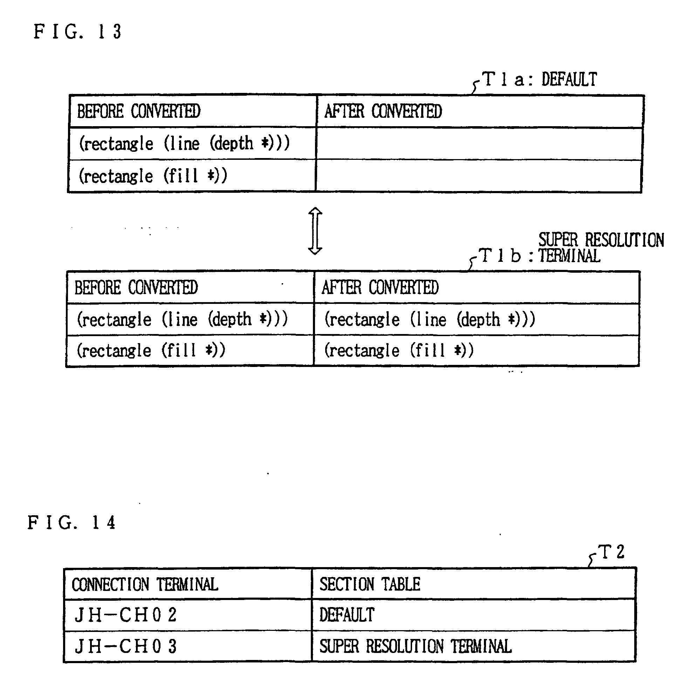

As illustrated in Figure 12, the terminal equipment 2 in accordance with the present embodiment is provided with a terminal information transmitting section 23 which transmits the information on the terminal equipment. In addition to the structure of the server 4b shown in Figure 5, the server 4f in accordance with the present embodiment is provided with a terminal data receiving section 46 which receives information from the terminal equipment 2 and gives an instruction to the animated data converter 42. Further, as illustrated in Figure 13, the conversion rule management section 52 stores therein conversion tables T1a and T1b for respective terminal equipments 2 which the server 4f can manage and a table T2 for use in the selection of a conversion table T1a, T1b, ...as shown in Figure 14.

The terminal data receiving section 46 is provided for receiving information from the terminal data transmitting section 23 of the terminal equipment 2 of the data conversion requesting end. For example, in the state where the terminal data receiving section 46 is connected to the terminal equipment 2 via internet, the terminal data receiving section 46 receives information on the terminal equipment 2, for example, by describing the terminal information for use in specifying the kind of the terminal equipment 2 in the URL (Uniform Resource Locator) when the terminal equipment 2 makes an access to the server 4f, or identifying the terminal equipment 2 based on the port number to be accessed to or referring to a request header of the HTTP. In the state where the terminal data receiving section 46 is connected to a telephone line, the terminal information is received, for example, by utilizing the function of transmitter number display. Incidentally, as long as the kind of the terminal equipment 2 can be specified, the type of the foregoing information is not particularly limited. Examples of which include the type of the terminal equipment 2, the apparatus ID, the profile of the user, the connection conditions, etc.

On the other hand, for example, the conversion table T1a shown in Figure 13 is a conversion table of a default corresponding to the terminal equipment 2 of relatively low resolution, and stores therein a conversion rule for ignoring and eliminating the line thickness for sides of the square figure shape irrespectively of line thickness as specified before conversion. On the other hand, the Table 1b is a conversion table corresponding to the terminal equipment 2 of relatively high resolution, and stored therein a conversion rule for converting without changing the line thickness or the color in the inside of the square figure.

Additionally, in an example of Figure 14 shown is a Table which enables the kind of the terminal equipment 2 to be detected by the terminal information, and stored are a list of combinations of the kind of the apparatus and the conversion tables T1a ... to be selected. For example, in the case of adopting the terminal equipment 2 of the type "JH-CH02" , the terminal data receiving section 46, in reference to Table T2, instructs the conversion rule management section 52 to select the conversion Table T1a, and the data converter 51 converts the animated data A based on the conversion rule of the conversion table T1a. As a result, data on the line thickness for the sides or the color in the inside are omitted. On the other hand, in the case of adopting the terminal equipment 2 of the type "JH-CH03" , the conversion table T1b is selected, and quality animation is converted into the reproducible animated data A while maintaining the line thickness for sides and the color of the inside as specified.

As described, the server 4f is provided with the terminal data receiving section 46, and by selecting the conversion rule according to the terminal equipment 2 of the requesting end, the server 4f is capable of utilizing the conversion rule according to the performance or the function of the terminal equipment 2. It is therefore possible for the terminal equipment 2 to reproduce effective animation which the user can see with ease.

### [SEVENTH EMBODIMENT]

In the described first through six embodiments, the conversion logic/conversion rule to be used when the animated data converter 42 converts the animated data A may be stored in the server 4 (4a to 4f) beforehand, or the animated data converter 42 may receive the conversion logic/conversion rules via a communication path. As to the structures of the second and sixth embodiments, it may be arranged so as to receive only the conversion table.

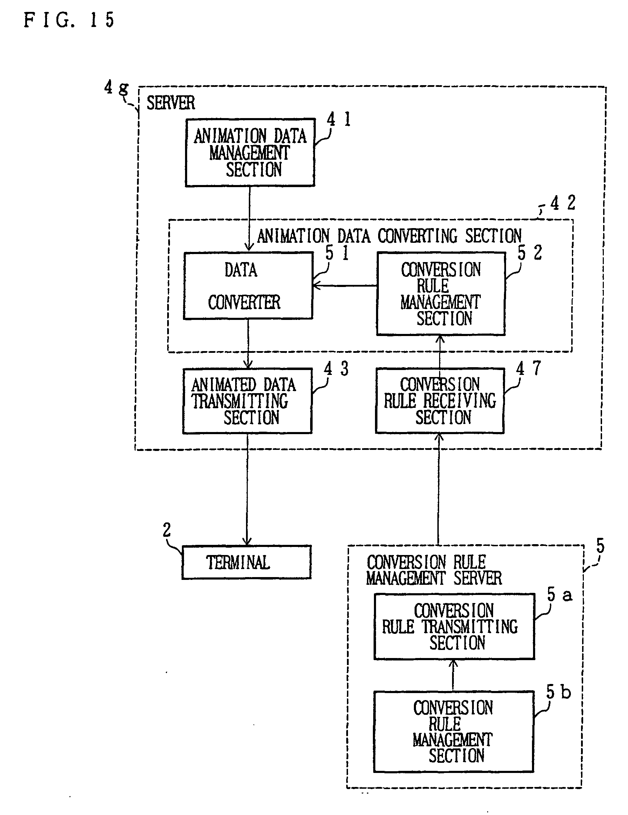

For example, a server 4g in accordance with the present embodiment will be explained when applied to structure of the second embodiment. As illustrated in Figure 15, the server 4g in accordance with the present embodiment is provided with a conversion rule receiving section 47 for receiving a conversion rule, in addition to the structure of the server 4b as illustrated in Figure 5. The conversion rule receiving section 47, for example, receives a conversion rule from a conversion rule management server 5 via a communication path such as internet. The conversion rule transmitting section 5a of the conversion rule management server 5 reads out the conversion rule from the conversion rule management section 5b, and communicates with a protocol which permits data to be transmitted to the conversion rule receiving section 47 such as a protcol in accordance with an HTTP protocol, etc. The transmitting end (receiving end) of the conversion rule is not limited to the conversion rule management server 5 as long as data indicative of conversion rule is transmitted. However, it is preferable that the conversion rule management server 5 be provided because the conversion rule as intensified can be controlled.

In the server 4g, since the conversion rule receiving section 47 is provided, when preparing/updating the conversion rule, a conversion rule can be set to each server 4g irrespectively of the number of servers 4g and the installation place only by transmitting the conversion rule as prepared/updated, the conversion rule can be set to each server 4g, and it is possible to perform maintenance/management of the animation communications system 1 with ease. As a result, it is possible to provide a large number of servers 4g for the same conversion with ease, and thus a plurality of servers can be operated in parallel on the network.

### [EIGHTH EMBODIMENT]

In the first through seventh embodiments, explanations will be given through the case where the animated data management section 41 is provided in the server 4 (4a ∼4 g ); however, it may be arranged so as to provide the animated data management section 41 separately from the server 4 .

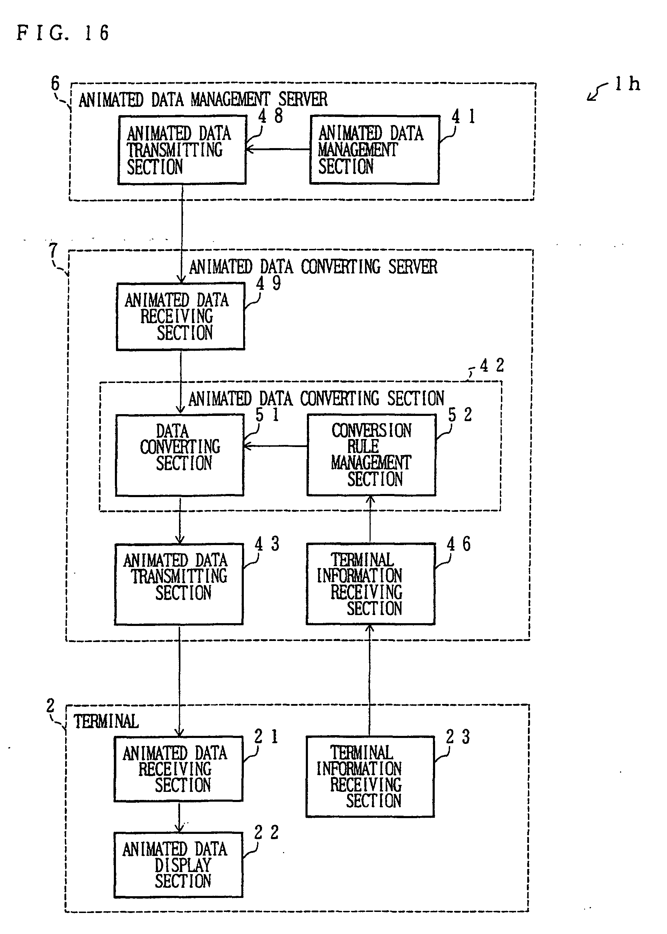

Explanations will be given through an animation communications system having the same structure as the animation communications system 1f shown in Figure 12. As illustrated in Figure 16, the animation communications system 1h includes the animated data management server 6 provided with the animated data management section 41, and the animated data conversion server 7 provided with the animated data converter 42, the animated data transmitting section 43, and a terminal data receiving section 46. Incidentally, the animated data conversion server 7 corresponds to the server as recited in claims.

The animated data management server 6 is provided with animated data transmitting section 48 for transmitting the animated data A to the animated data conversion server 7. On the other hand, the animated data conversion server 7 is provided with the animated data receiving section 49 for receiving the animated data A from the animated data transmitting section 48. Here, communications between the members 48 and 49 are performed in the protocol with which both of the members 48 and 49 can communicate. Examples of such protocols include: HTTP, FTP (File Transfer Protocol), SMTP (Simple Mail Transfer Protocol ), NNTP (Network News Transfer Protocol), Gopher, WAP (Wireless Application Protocol ) etc.

The animation communications system 1h in accordance with the present embodiment is arranged such that the animated data conversion server 7 converts the animated data A into the format according to the terminal equipment 2 as in the respective embodiments. The terminal equipment 2 is therefore capable of receiving animated data A according to the function and performances, and effective animated data which is easy to see can be reproduced.

Also according to the present embodiment, the animated data management server 6 and the animated data conversion server 7 are separated, the contents of the animated data in the animated data management server 6 and the conversion rule in the animated data conversion server 7 can be managed independently. As a result, decentralized managements of the contents and the decentralized management of the conversion functions of the contents.

### [NINTH EMBODIMENT]

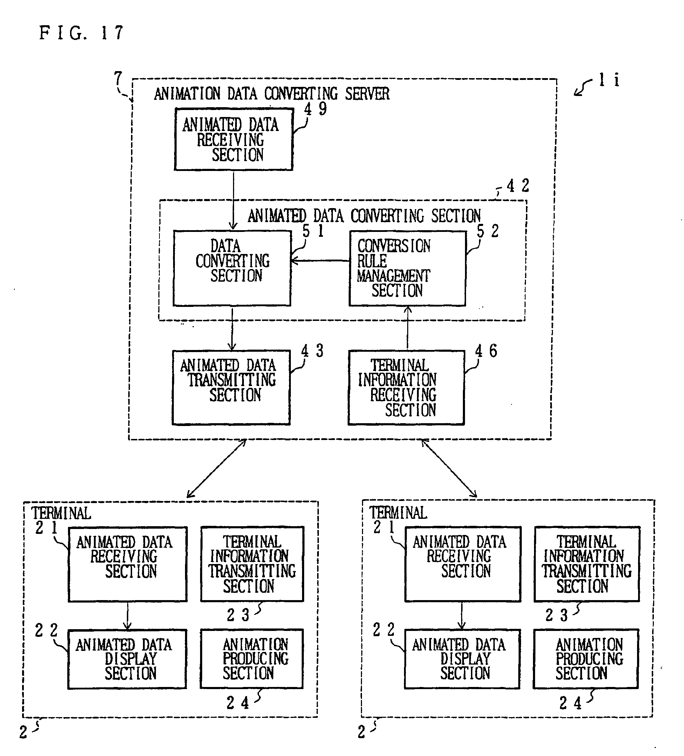

In each of the above amendments, explanations have been given through the case where the animated data A stored in the server 4 or the animated data management server 6 is displayed in the terminal equipment 2. In contrast, in the present embodiment, explanations will be given through the case where the terminal equipments 2 provided with the animation generating sections 24 communicate each other as illustrated in Figure 17. Here, it may be arranged such that the animation generating section 24 transmits the animated data A self-sustainingly to the animated data conversion server 7, or the animated data conversion server 7 gives a data transmission request to the animation generating section 24 in the terminal equipment 2 via the animated data conversion server 7.

As in the animated data management section 41, the animation generating section 24 manages the animated data A as in the animated data management section 41. Incidentally, the animated data A stored in the animation generating section 24 may be in the same format as the animated data management section 41, or the kinds of the display elements may be simplified in accordance with the terminal equipment 2. Incidentally, the animation generating section 24 may be arranged so as to prepare the animated data A stored beforehand, or prepares the animated data A by preparing a plurality of static images lines, polygons, elliptic figure, character string etc., beforehand in accordance with the user's inputs, and assigning orders for these static screens. Incidentally, color may be set in each character.

The animation communications system 1i in accordance with the present embodiment is also arranged such that in the animated data conversion server 7 provided outside the terminal equipment 2, the animated data A is converted into the format according to the terminal equipment 2 on the reproducing side. Therefore, as compared to the case of converting in the terminal equipment 2 of the transmitting end or receiving end, the burden of the terminal equipment 2 can be reduced. According to the foregoing structure, the communications of the animated data can be performed in real time even among a plurality of terminal equipments 2 of mutually different performances and functions.

### [TENTH EMBODIMENT]

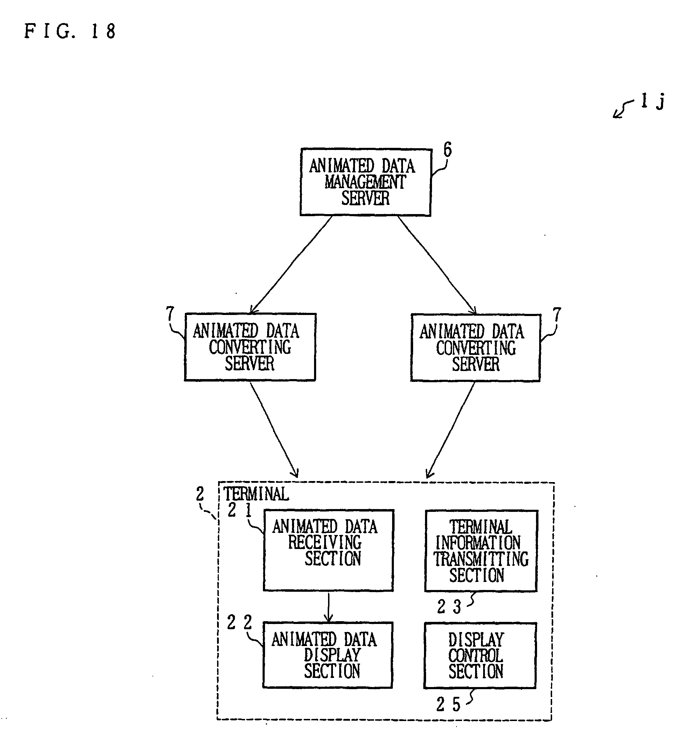

In the eighth embodiment, explanations will be given through the case where a single animated data conversion server 7 is provided. In the present embodiment, as illustrated in Figure 18, explanations will be given through an animation communications system 1j provided with a plurality of animated data conversion servers 7.

Namely, the terminal equipment 2 in accordance with the present embodiment can be connected to a plurality of animated data conversion servers 7, and the terminal transmitting section 23 of the terminal equipment 2 is arranged so as to transit the information regarding the terminal equipment 2 to all the connected animated data conversion servers 7. In addition to the structure shown in Figure 16, the terminal equipment 2 is provided with a display control section 25, and animated data receiving section 21 receives the animated data A transmitted from the plurality of animated data conversion server 7, and supplies the data as received to the display control section 25 together with data indicative of the transmitting end of data. In response, the display control section 25 selects one of a plurality of animated data A in consideration of quality of the animated data A from each animated data converter 7, an amount data already transmitted, time data for transmission, etc, and displays the animated data A as selected in the animated data display section 22. Here, the selection method may be selected based on a user's instruction, or it may be arranged so as to automatically select the conversion method according to time, and with this arrangement, for example, the conversion method of smaller amount of data should be automatically selected during busy hours.

According to the foregoing structure, the terminal equipment 2 receives animated data A as converted in respective conversion method from the plurality of animated data conversion systems, and the animated data A as converted, or receive animated data A of mutually different reaction speed even when adopting the same conversion method, and displayed the animated data A as selected. As a result, animation of higher quality or higher display speed can be selected.

### [ELEVENTH EMBODIMENT ]

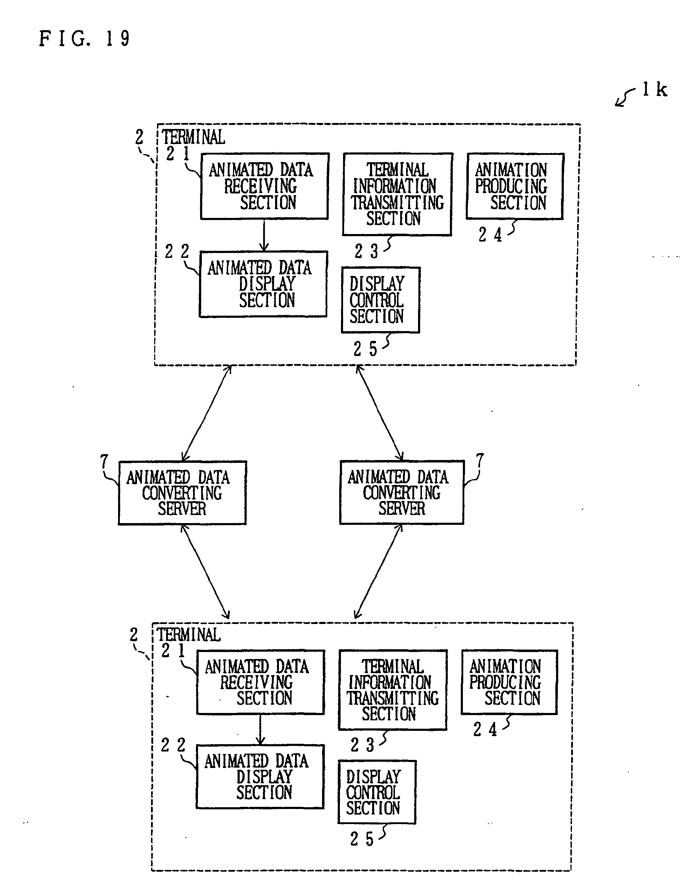

As illustrated in Figure 19, the animation communications system 1k in accordance with the present embodiment is arranged such that the terminal equipments 2 communicate each other as in the ninth embodiment. Further, as in the tenth embodiment, a plurality of animated data conversion servers 7 are provided. As in the tenth embodiment, in each terminal equipment 2, the display control section 25 selects one of the animated data A from a plurality of animated data conversion servers 7 and displays the animated data A as selected.

The communications system 1k of the present embodiment is also provided with a plurality animated data conversion server 7. Therefore, in the system for transmitting the animated data A between the terminal equipments 2, as in the tenth embodiment, high quality animation or high speed animation can be selected, and communication quality of users of the terminals can be improved.

### [TWELFTH EMBODIMETN]

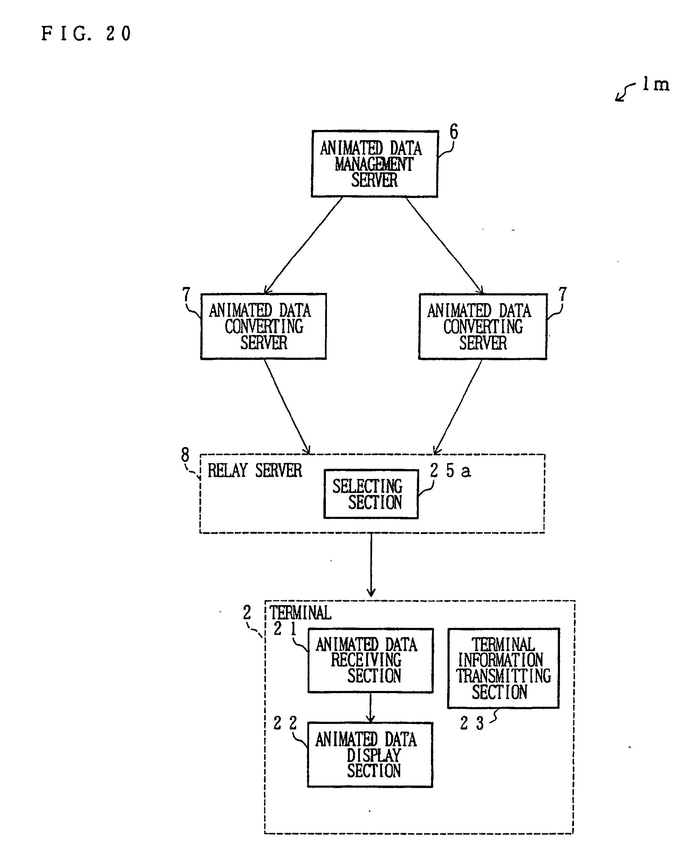

In the tenth and eleventh embodiments, explanations will be given through the case where the display control section 25 is provided in the terminal equipment 2. In contrast, in the present embodiment, as shown in Figure 20, the relay sever 8 with the selection section 25a having the same structure as the selection section 25 is provided between the terminal equipment 2 and the animated data conversion server 7.

The explanations will be given through the case of adopting the eleventh embodiment. As illustrated in Figure 20, the animation communications system 1m in accordance with the present embodiment is arranged such that the relay server 8 is provided between the terminal equipment 2 and each animated data conversion server 7, and the display control section 25 of the terminal equipment 2 is moved as the selection section 25a in the relay server 8. Upon receiving a transmission request of the animated data A from the terminal equipment 2, as in the display control section 25, the selecting section 25a selects among a plurality of animated data conversion servers 7, an optimal animated data conversion server 7, and relays between the animated data conversion server 7 and the terminal equipment 2.

As a result, as in the tenth arid eleventh embodiments, the terminal equipment 2 can display animation of higher quality or higher display speed as compared to the case of single animated data conversion server 7.

In the first through twelfth embodiments, respective members which constitute the terminal equipment 2, the server 4 , the conversion rule management server 5, the animated data management server 6, the animated data conversion server 7, and the relay server 8, etc., may be constituted by function blocks which can be realized by executing programs stored in a recording medium such as ROM, RAM, etc., by arithmetic means such as CPU, etc., or may be realized by hardware which performs a predetermined process. Incidentally, a combination of a hardware which performs a part of the process and arithmetic means which executes a program for executing the control of the hardware or the remaining process. Further, the program may be executed by the single arithmetic means, or by a plurality of arithmetic means connected via buses in the inside of the device or a variety of communications paths.

As to the program, the program data indicative of program itself, or data for use in preparing the program is stored in a recording medium, and the recording medium is distributed, or the program data is distributed by transmitting by means of wire or wireless or other communications means, etc., and is executed by the arithmetic means.

Here, it is preferable for the distribution of the program data that the recording medium be detachable. After the program data is distributed, however, whether or not the recording medium is detachable does not make any differences. The type of the recording medium is not particularly specified as long as the program data is stored, and rewritable (writable), volatile or involatile recording media may be equally adopted. As to the recording media, the recording method and the shape are not specified either, and examples of the recording medium include tapes such as a magnetic tape, a cassette tape, magnetic disks such as a floppy disk, a hard disk, etc., or disks such as CD-ROM, a magneto-optical disk (MO), a mini-disk (MD), a digital video disk (DVD), etc. The recording medium may be a card, such as an IC card, an optical card, or a semiconductor memory such as a mask ROM, EPROM, EEFROM or flush ROM, etc.

The program data may be codes for use in instructing the order of all the processes to the arithmetic means, or in the case where the basic program capable (for example, an operating system, library, etc.) of executing a part or entire process by calling in a predetermined order, a part or all the processes may be replaced with codes or pointers for instructing the arithmetic means to call the basic program.

The program data may be stored in the recording medium in such a manner that the arithmetic means can access and execute the program, for example, as in the case being stored in real memory. Or the program data may be stored in the format before being stored in real memory and after being installed in a local recording medium (for example, real memory, hard disk, etc.,) to which the arithmetic means is accessible any time, or the format before being installed in a local recording medium from the network or a transportable recording medium. Incidentally, it is not necessarily that the program data be stored in object codes after being compiled, source codes, and may be stored in intermediate codes to be prepared in the middle of source codes, interpret, or compile, etc. In any case, by a process or a combination of processes for uncompression, decoding, interpretation, compile, linkage, or storage into the real memory, etc., the same effect can be ensured as long as the arithmetic means is capable of converting into an executable program irrespectively of the format of storing the program data into the recording medium.

The embodiments and concrete examples of implementation discussed in the foregoing detailed explanation of the present invention serve solely to illustrate the technical contents of the present invention, which should not be narrowly interpreted within the limits of such concrete examples, but rather may be applied in many variations without departing from the spirit of the present invention and the scope of the patent claims set forth below.

### INDUSTRIAL APPLICABILITY

The server in accordance with the present invention is arranged such that before being transmitted to the terminal equipment, the first frame data is converted into the second frame data according to the terminal equipment. In this way, even when the first frame data is not for the terminal equipment, it is possible for the terminal equipment to obtain animated data for self-apparatus. As a result, as compared to the case of directly receiving the first frame data by the terminal equipment, the burden of the terminal equipment can be reduced, and an improved frame rate in reproducing animated data can be realized. Further, the first and second frame data are frame data wherein the frame is expressed by at least one graphic data, and it is therefore possible for the server to prepare animated data in real time without preparing and storing animated data for each terminal equipment each time. As a result, a system, which is capable of providing a smoother animation display by the terminal equipment, can be realized without significantly increasing memory required for the server.

## Claims

1. A server for transmitting data indicative of animation to a terminal equipment **characterized by** comprising:
a converter for converting first frame data wherein a frame of animation is expressed by at least one graphic data into second frame data to be adaptable in the terminal equipment based on a predetermined conversion rule.

2. The server as defined in claim 1, **characterized in that**:
the converter converts first frame data into second frame data by converting graphic data inexpressible by the terminal equipment to be expressible by the terminal equipment or deleting the graphic data inexpressible by the terminal equipment.

3. The server as defined in claim 1, **characterized in that**:
the converter converts the first frame data into the second frame data by interpolating key frames as input as the first frame data at a frame rate according to the terminal equipment.

4. The server as defined in claim 1, **characterized by** further comprising:
a format converting section for converting the second frame data into bit mapped data animated data.

5. The server as defined in claim 1, further comprising:
a terminal information receiving section for receiving information regarding the terminal equipment connected to the server, wherein:
the converter converts the first frame data into the second frame data referring to the information regarding the terminal equipment.

6. The server as set forth in claim 1, further comprising:
a situation detecting section for detecting a situation at a time of transmitting the animated data, wherein:
the converter converts the first frame data into the second frame data referring to the situation as detected.

7. The server as defined in claim 1, **characterized in that**:
the situation detecting section predicts circumambient brightness of the terminal equipment, and
the converter adjusts a contrast according to the circumambient brightness in such a manner that a higher contrast is set for darker circumference than brighter circumference when converting the first frame data into the second frame data.

8. The server as defined in claim 7, **characterized in that**:
the converter estimates the circumambient brightness according to time.

9. The server as defined in claim 7, **characterized by** further comprising:
a weather information obtaining section for obtaining circumambient weather of the terminal equipment,
wherein the converter estimates the circumambient brightness based on the weather information.

10. A terminal equipment provided with a display section for displaying animation, **characterized by** comprising:
an animated data receiving section for receiving data indicative of animation by communicating with a server provided with a converter for converting first frame data wherein a frame of animation is expressed by at least one graphic data into second frame data adaptable in the terminal equipment based on a conversion rule determined referring to terminal information indicative of the terminal equipment; and
a terminal data transmitting section for transmitting terminal information indicative of own terminal equipment to the server.

11. A terminal equipment provided with a display section for displaying animation, **characterized by** comprising:
an animated data receiving section for receiving data indicative of animation by communicating with one of a plurality of servers provided with a converter for converting first frame data wherein a frame of animation is expressed by at least one graphic data into second frame data adaptable in the terminal equipment based on a predetermined conversion rule; and
a display control section which controls to determine animated data sent from which of the plurality of servers is to be displayed in the display section.

12. A relay server **characterized by** being provided between a terminal equipment having a display section for displaying animation, and a plurality of servers for outputting data indicative of animation, wherein:
when receiving a request from the terminal equipment, said relay server i) selects one of said plurality of servers, each being provided with a converter for converting first frame data in which a frame of animation is expressed by at least one graphic data into second frame data to be adaptable in the terminal equipment based on a predetermined conversion rule, and ii) relays communications between a server as selected and the terminal equipment.

13. A conversion rule management server, **characterized by** comprising:
a conversion rule transmitting section for transmitting a conversion rule, based on which first frame data is converted into second frame data, to a server being provided with a converter for converting first frame data in which a frame of animation is expressed by at least one graphic data into second frame data to be adaptable in the terminal equipment, based on a predetermined conversion rule.

14. A recording medium **characterized in that** a program readable by a computer is recorded, said computer being capable of communicating with a terminal equipment,
whereon a program for activating the computer as i) an animated data transmitting section for transmitting data indicative of animation to the terminal equipment and ii) a converter for converting first frame data in which a frame of animation is expressed by at least one graphic data into second frame data to be adaptable in the terminal equipment, based on a predetermined conversion rule.
